# FASCICULE DE BREVET EUROPEEN

(11) **EP 0 757 338 B1**
(45) Date de publication et mention de la délivrance du brevet: **24.04.2002**
(21) Numéro de dépôt: 96401611.7
(22) Date de dépôt: 19.07.1996
(51) Int. Cl.: G07F 7/10

(54) **Système de paiement sécurisé par transfert de monnaie électronique à travers un réseau interbancaire**
Durch elektronische Geldüberweisungen mittels eines Bankenverbindungsnetzwerkes gesichertes Bezahlungssystem
Secure payment system by electronic funds transfer through a bank interconnecting network

(30) Priorité: 19.07.1995 FR 9508754
(43) Date de publication de la demande: 05.02.1997
(73) Titulaire: FRANCE TELECOM, 75015 Paris (FR); SINTEF DELAB, 7034 Trondheim NTH (NO); LA POSTE, 92777 Boulogne Billancourt Cédex (FR)
(72) Inventeur: Mjolsnes, Stig Frode, Cabinet Ballot-Schmit, 94230 Cachan (FR); Michelsen, Rolf, Cabinet Ballot-Schmit, 94230 Cachan (FR); Revillet, Marie-Josèphe, Cabinet Ballot-Schmit, 94230 Cachan (FR); De Solages, Aymeric, Cabinet Ballot-Schmit, 94230 Cachan (FR)
(74) Mandataire: Schmit, Christian Norbert Marie

(56) Documents cités:
- EP-A- 0 542 298
- EP-A- 0 590 861
- US-A- 5 261 002
- COMPUTERS & SECURITY INTERNATIONAL JOURNAL DEVOTED TO THE STUDY OF TECHNICAL AND FINANCIAL ASPECTS OF COMPUTER SECURITY, vol. 9, no. 8, 1 Décembre 1990, OXFORD - GB, pages 715-721, XP000176619 BURK H ET AL: "VALUE EXCHANGE SYSTEMS ENABLING SECURITY AND UNOBSERVABILITY"
- LECTURE NOTES IN COMPUTER SCIENCE : PROCEEDINGS ESORICS '94 (THIRD EUROPEAN SYMPOSIUM ON RESEARCH IN COMPUTER SECURITY), vol. 875, Novembre 1994, BRIGHTON-UK / SPRINGER-VERLAG, pages 207-215, XP000565346 JAN L. CAMENISCH ET.AL.: "An Efficient Electronic Payment System Protecting Privacy."
- LECTURE NOTES IN COMPUTER SCIENCE : ADVANCES IN CRYPTOLOGY - PROCEEDINGS OF CRYPTO'88, SANTA BARBARA, vol. 403, 21 - 25 Août 1988, GOLDWASSER S (ED.) SPRINGER_VERLAG, pages 319-327, XP000090658 CHAUM D ET AL: "UNTRACEABLE ELECTRONIC CASH"
- ADVANCES IN CRYPTOLOGY, SANTA BARBARA, AUG. 11 - 15, 1991, no. -, 1 Janvier 1991, FEIGENBAUM J, pages 324-337, XP000269038 TATSUAKI OKAMOTO ET AL: "UNIVERSAL ELECTRONIC CASH"
- COMMUNICATIONS OF THE ASSOCIATION FOR COMPUTING MACHINERY, vol. 28, no. 10, Octobre 1985, NEW YORK US, pages 1030-1044, XP002000091 CHAUM D.: "Security without Identification : Transaction Systems to make Big Brother obsolete."
- SCIENTIFIC AMERICAN, vol. 267, no. 2, Août 1992, NEW YORK US, pages 76-81, XP000329993 CHAUM D: "ACHIEVING ELECTRONIC PRIVACY"

## Description

La présente invention se rapporte à un système de paiement sécurisé par transfert de monnaie électronique à travers un réseau interbancaire.

On entend par monnaie électronique, une information numérique représentant un montant d'argent.

Pour les utilisateurs cette somme est enregistrée dans un support portable que l'on appelle classiquement porte-monnaie électronique.

Le porte-monnaie électronique est un appareil électronique qui se présente habituellement sous la forme d'une carte à microprocesseur. Le fonctionnement interne du porte-monnaie électronique et son architecture ont fait aujourd'hui l'objet de nombreuses publications c'est pourquoi on ne donnera pas plus de détails sur cet appareil. Ce qu'il convient de savoir c'est que lors d'un chargement du porte-monnaie l'appareil bancaire habilité à effectuer ce chargement inscrit un montant qui rend le solde de l'utilisateur positif. Ce solde est décrémenté par l'électronique interne au fur et à mesure des paiement qu'effectue l'utilisateur, il est incrémenté lorsqu'il perçoit de l'argent.

On entend par réseau interbancaire, le réseau de transmission de données numériques permettant de transférer la monnaie électronique qui part d'un terminal de paiement pour aboutir à un organe de compensation monétaire interbancaire. Cet organe envoie un message de crédit de compte à la bande du prestataire de service et un message de débit vers la banque émettrice de monnaie électronique.

Aujourd'hui encore, même si les développements sur les porte-monnaie électronique touchent à leur fin, seuls deux modes de paiement, chez un commerçant ou un prestataire de services sont possibles, hormis le paiement à l'aide de pièces et de billets, le paiement à l'aide d'un chèque ou d'un titre de paiement, et le paiement par carte bancaire. Ils se distinguent l'un de l'autre par la représentation de l'argent (papier pour l'un, et format électronique pour l'autre), mais le principe d'utilisation en est le même.

Les titres de paiement sont fournis par la banque du client. Lors d'un achat celui-ci émet un titre de paiement d'un montant donné à l'ordre du commerçant ou du prestataire de service. Ce dernier le retourne à sa banque qui est en général différente de celle du client. Le système de compensation permet de créditer le compte du commerçant et de débiter celui du client, à sa banque.

Dans les systèmes de compensation actuels, la banque du client ne transmet pas effectivement l'argent à la banque du commerçant à chaque fois qu'un paiement est enregistré. Si les deux banques ont établi des liens contractuels bilatéraux, chacune d'elle mémorise le montant qu'elle doit à l'autre. A la fin d'une période prédéfinie, uniquement la différence entre les deux montants cumulés par chaque banque est transféré de l'une vers l'autre. Ce montant est généralement petit par rapport au flux total d'argent théoriquement échangé entre les deux banques. Ceci permet de limiter les transferts d'argent.

Dans un contexte multinational tel qu'il existe actuellement, les accords ne sont pas bilatéraux banque par banque, mais un agrément global est signé par chaque banque participant au système, avec le système de compensation. Chaque banque tient un compte avec le système de compensation, dont le solde est incrémenté par le total des titres de paiement présentés à cette banque, et est décrémenté par le montant total des titres de paiement émis par cette banque et reçus par les autres banques.

Dans ce schéma, la banque joue le rôle de collecteur de titres de paiement.

La banque qui reçoit un titre de paiement effectue un certain nombre de vérifications : sur les chèques et les titres de paiement universels, vérification de la présence d'une signature et de la cohérence entre le montant en chiffres et le montant littéral, vérification de la signature à partir d'une signature de référence du titulaire du compte à partir d'un certain montant du chèque. Pour les paiements par carte bancaire, une vérification est effectuée au moment du paiement par la présentation du code confidentiel (vérification de l'identité du client), la validité de la carte est également vérifiée.

Cependant, ces vérifications ne sont pas suffisantes. La signature sur un chèque n'est authentifiée qu'à partir d'un certain montant (plafond variable selon les banques), et cette vérification ne met pas à l'abri des imitations. En cas d'utilisation de cartes bancaires à piste magnétique, de fausses cartes peuvent avoir été fabriquées et le terminal de paiement peut alors considérer la carte comme authentique.

Les systèmes de compensation, basés sur des systèmes informatiques, ne sont pas à l'abri d'erreur : erreurs de saisie de la part d'un opérateur, détournement de fond, ... Ce principe de fonctionnement repose d'autre part sur la confiance mutuelle entre organismes bancaires.

Ce système ne peut que fonctionner à une échelle relativement petite. Il est difficile d'avoir un système de compensation mondial. Il serait donc nécessaire d'avoir une architecture bancaire répartie, et une exploitation la plus locale possible des titres de paiement.

Dans les schémas nationaux actuels ou annoncés de paiement par porte-monnaie électronique les transactions enregistrées auprès de chaque terminal de paiement ne sont pas stockées individuellement mais accumulées dans ce qui est couramment appelé un module de sécurité.

Pour la banque il n'est pas possible d'effectuer des vérifications individuelles sur chaque transaction comme cela se fait avec les techniques de paiement classiques. Car avec le cumul des transactions la notion de chèque et/ou de titre de paiement disparaît ainsi que la notion de transactions individuelles. L'intégrité et l'authenticité des paiements reposent sur la carte porte-monnaie du client, et sur le module de sécurité situé dans le terminal du commerçant.

Or selon des développements récents du porte-monnaie électronique, il est prévu que lors d'une opération de chargement par des appareils habilités présents dans certaines banques ou lieux publics (poste etc...), on charge également des titres de paiements électroniques.

Pour simplifier on désignera par la suite ces titres de paiement par chèques et ces appareils habilités par banque émettrice.

Ainsi selon ces développements une somme d'argent M sera enregistrée dans le solde du porte-monnaie et plusieurs chèques électroniques seront chargés dans une autre partie de la mémoire du porte-monnaie. Leur nombre pourra par exemple être choisi par l'utilisateur ou par la banque émettrice dans des limites fixées ou pourra être fixé préalablement sans choix possible.

Un chèque électronique qui vient d'être chargé se présente sous la forme d'une information numérique qui reflète l'identité de la banque émettrice et de la carte porte-monnaie sans toutefois la révéler, la signature étant dite aveugle.

Cette information comporte en fait une première signature Sqb électronique permettant d'authentifier la banque émettrice et une deuxième signature Sc permettant d'authentifier la carte sans que l'identité de la carte n'apparaisse au clair.

Les signatures calculées et enregistrées pour chaque chèque sont distinctes. Elles sont obtenues par un algorithme de signature électronique classique faisant intervenir outre une fonction de génération de signature avec clé secrète de clé publique, un ou plusieurs aléas différents pour chaque chèque.

Pour la génération de signatures, on utilise un algorithme tel que l'algorithme RSA (Rivest-Shamir-Adleman).

On peut également utiliser un algorithme publié par le US Institute of Standards and Technologie tel que l'algorithme DSA (Digital Signature Algorithm) ou un autre protocole de signature tel que l'algorithme de Schnorr.

Pour obtenir des signatures aveugles on rajoute à ces algorithmes de génération de signature un algorithme rendant les signatures aveugles. On peut par exemple utiliser pour cela l'algorithme développé par David Chaum. La génération de signatures électroniques aveugles relève de techniques connues. On pourra également se reporter au document D1 : Lectures Notes in Computer Science : «Proceedings Esorics '94, Vol.875, November 1994, Brighton-UK/Springer-Verlag».

Dans le cadre de ces développements un nouveau problème se pose qui est celui d'assurer des vérifications d'authenticité des chèques et de non réutilisation d'un chèque électronique ayant déjà transité par le réseau bancaire après un premier paiement.
La présente invention a pour objet de résoudre ce problème. Elle permet ainsi d'éviter et/ou de détecter la fabrication de fausse monnaie électronique.
La présente invention permet en outre de garder un caractère anonyme à la monnaie qui circule.
La présente invention a pour objet un système de paiement par transfert de monnaie électronique selon la revendication 1.

Selon un autre objet de l'invention l'unité de vérification comporte des moyens de traitement permettant d'effectuer des opérations d'authentification et des opérations de comparaison des signatures électroniques de chèques reçus, à des signatures déjà enregistrées.

Selon un autre objet de l'invention les moyens de traitement permettent en outre d'effectuer une recherche d'identité du signataire de chèques utilisés plusieurs fois.

Selon un autre objet de l'invention l'unité de vérification comporte des moyens de mémorisation des chèques électroniques transférés par le réseau lors d'une opération de collecte.

Selon un autre objet de l'invention l'unité de vérification comporte des moyens de mémorisation d'une liste noire dans laquelle sont enregistrés les chèques électroniques non authentifiés ou réutilisés.

Selon un mode préféré de réalisation, l'unité de compensation comporte une entité permettant de réaliser un aiguillage des informations reçues de l'unité de collecte, et une entité de compensation.

L'entité de compensation comporte des moyens de traitement et des moyens de mémorisation permettant de déterminer et d'enregistrer les débits de chaque banque émettrice et les crédits de chaque banque collectrice.

La banque de collecte comporte des moyens de traitement et de mémorisation pour opérer un test de cohérence des informations collectées et pour mémoriser à partir de ces informations les chèques électroniques acceptés après ce test.

La banque de collecte comporte en outre une entité de traitement et de mémorisation permettant d'effectuer l'enregistrement de tous les chèques électroniques traités par l'unité de vérification et déclarés valides ainsi qu'une mise à jour des comptes pour chaque commerçant client de cette banque.

La présente invention sera mieux comprise à l'aide de la description qui est faite et qui est donnée à titre d'exemple non limitatif en regard des figures sur lesquelles :
- la figure 1 représente un schéma de principe du système selon l'invention,
- la figure 2 représente un schéma plus détaillé du système.

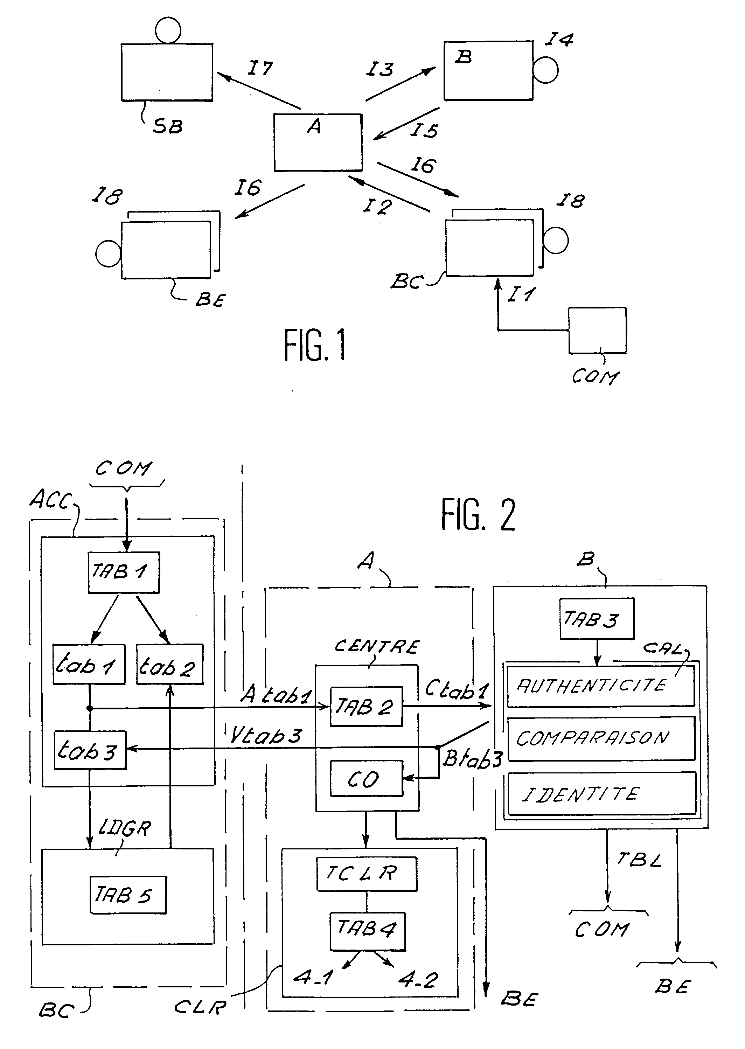

Dans toute la suite de la description on parlera de banque émettrice BE ou de banque de collecte BC pour désigner l'unité de traitement d'information de ces banques. Ces unités pourront être avantageusement constituées par des microordinateurs reliés au réseau de transmission interbancaire.
Il est bien entendu également que chaque banque émettrice peut être banque de collecte pour certains clients et émettrice pour d'autres clients. De même que chaque banque de collecte peut être banque émettrice pour certains clients et de collecte pour d'autres clients.
On parlera de client pour désigner tout utilisateur d'un porte-monnaie électronique. On parlera de commerçant pour désigner tout prestataire de service comportant un terminal de paiement par porte-monnaie électronique.
On a donc représenté sur la figure 1, une unité banque émettrice BE, une unité banque de collecte BC, un terminal de paiement COM placé chez un commerçant, une unité de compensation A, une unité de vérification B et une unité de liquidation SB.
Chaque unité est avantageusement réalisée par un système de traitement de type microordinateur placé dans les banques pour les unités BE et BC ou dans un organisme habilité de type bancaire pour les unités SB, B et A. Les unités COM sont bien sûr placées chez les commerçants.
Les références I1 à I7 représentent les transferts d'informations dans l'ordre où ils sont opérés.
Les transferts entre l'unité de compensation et les autres unités sont réalisés par le réseau de transmission interbancaire. Les échanges entre les différentes entités de l'unité de compensation peuvent être réalisées soit par un réseau (local par exemple), soit par une base de donnée.
L'unité SB exécute les ordres de liquidation. Cette unité établit l'équilibre des comptes entre la banque émettrice et les banques de collecte en vue de la vérification du flux de la monnaie.
Conformément à l'invention le système comporte en outre, l'unité B de vérification d'authenticité des chèques électroniques et de la non réutilisation. Cette unité est reliée à l'unité de compensation.
Voici le fonctionnement du système de paiement.
Un client porteur d'une carte porte-monnaie électronique effectue une opération de retrait auprès d'une banque émettrice (qui n'est pas nécessairement une banque). Le porte-monnaie comporte dans son solde une donnée représentant le montant M et plusieurs chèques électroniques Ch1, Ch2 ...etc.
Le chèque Ch1 se présente sous la forme d'une signature numérique Sbq1 et d'une signature numérique Sc1 qui, et cela est donné à titre d'exemple, seront sous la forme :
Sbq1 = f(K1, Dp) et Sc1 = f(K2, Dc), dans le cas où elles sont générées à partir de l'algorithme RSA :
K1 et K2 sont les clés secrètes associées à des clés publiques Kpb et Kpc, Dp est une donnée identifiant la banque et Dc une donnée identifiant la carte porte-monnaie.
Lors d'un achat le client transmet de la monnaie électronique au terminal COM. Pour cela la carte transmet les signatures Sbq et Sc d'un chèque et calcule une troisième signature de paiement Sp permettant d'authentifier le montant du chèque.
Bien entendu pour cela la carte possède toutes les ressources (programmes et moyens de calculs) nécessaires à la mise en oeuvre du calcul d'une signature. Cette mise en oeuvre fait intervenir l'algorithme de signature f à clé secrète Kc et publique Kf. La carte détient le couple (Kc, Kf) nécessaire à ce calcul, la donnée Dp l'identifiant et le montant du chèque.
Dans le cas de la génération pour l'algorithme RSA, la signature est sous la forme : Sp = f(Kc, M, Dp).
Le terminal recevant le chèque pourra alors authentifier le chèque sans connaître l'identité de la carte mais ne pourra pas vérifier s'il s'agit d'une double utilisation pour le chèque.
Le solde de la carte est décrémenté de la valeur du chèque émis.
Les chèques électroniques reçus par le terminal COM sont transmis individuellement à la banque de collecte BC ce qui correspond au transfert des informations I3 à l'unité B.
L'unité B renvoie alors une information réponse I5 à l'unité A qui peut ainsi mettre à jour une liste des débits pour la banque émettrice et la liste des crédits pour la banque de collecte. Cette unité A peut ensuite envoyer à l'unité de liquidation SB des demandes de liquidation I7, des messages de débits I6 à la banque émettrice BE ainsi que des messages de crédits I6 à la banque de collecte BC.
L'ensemble de ces transferts et traitements vont être détaillés dans la suite de la description faite en référence à la figure 2.
Sur la figure 2, on a détaillé les différentes entités fonctionnelles et les échanges d'informations entre ces entités. La banque de collecte BC comporte une entité fonctionnelle ACC qui reçoit les demandes de dépôt et stocke les chèques électroniques à créditer dans une table TAB1 qui comporte une partie tab1 réservée au dépôt et une partie tab2 réservée aux chèques rejetés. La banque BC effectue en outre un premier test de cohérence sur les informations reçues. Il s'agit d'un test de format des données (vérification du nombre de bits reçus par rapport au nombre attendu).
Le contenu de tab1 est transféré sous la forme d'un message Atabl vers l'unité A et plus précisément vers l'entité CENTRE qui transmet le contenu de cette table à l'unité B après l'avoir éventuellement enregistré dans une table TAB2. Le message Ctabl correspondant au contenu de cette table est reçu et traité par l'unité B de la manière qui va être détaillée ci-dessous.
L'unité B opère une première vérification sur les chèques numériques reçus consistant à effectuer une authentification des signatures. Il s'agit d'une vérification cryptographique permettant de s'assurer que les signatures Sqb1, Sc1 et Sp sont authentiques.
Cette vérification se fait de manière classique au moyen de la fonction de vérification appropriée à l'algorithme de génération de signature utilisé. Dans le cas de l'algorithme RSA, on utilise la fonction inverse de la fonction f qui a servi à élaborer la signature et la clé publique associée à la clé secrète K de la banque ou de la carte selon le cas.
Ainsi pour un chèque donné chl et si on note f' l'inverse de f, on vérifie que :
f'(kpb, Dq, Sqb1) = "OK"
et que : f'(Kpc, Dc, Sc) = "OK"

Le résultat pourra se présenter par exemple sous la forme d'un bit 1 ou à 0 ce qui correspondra selon la convention adoptée à un résultat positif (signature authentifiée) ou à un résultat négatif (signature refusée).
Après ce premier test d'authenticité l'unité B compare pour chaque chèque reçu les valeurs des signatures Sbq, Sc par rapport à des valeurs enregistrées au fur et à mesure des réceptions des contenus de tables tab1.
En pratique pour un chèque Ch1 on va comparer la valeur des signatures Sbq1 et Sc1 aux signatures déjà enregistrées dans une table TAB3. Cette table est mise à jour au fur et à mesure des arrivées des informations Ctab1.
A l'issu du résultat de ces comparaisons les chèques sont considérés comme cryptographiquement valides (authentifiés) et utilisées une seule fois.
Un chèque n'a été utilisé qu'une seule fois, si après comparaison avec le contenu de la table TAB3, on n'a pas trouvé de signatures Sbq1 et Sc identiques.
Les chèques valides et utilisés une seule fois sont transmis à la banque de collecte BC via l'entité CENTRE sous la forme d'une information Btab3 reçue par cette entité à la banque BC. L'entité CENTRE recopie le contenu CO de Batb3. Cette copie est communiquée à une entité CLR qui comporte une table TAB4 constituée de deux tables 4-1 et 4-2. La table 4-1 permet de mémoriser les débits, la table 4-2 permet de mémoriser les crédits.

Cette entité CLR établit la liste des débits (pour les banques émettrices) et crédits (pour les banques de collecte) pour chaque compte bancaire, et effectue périodiquement une compensation entre ces différentes banques en envoyant les informations à la banque de liquidation SB.
D'autre part l'entité CENTRE transmet également la copie de la table des chèques valides et utilisés une seule fois aux banques émettrices BE.
La table tab3 reçue au moyen de l'information Vtab3 par l'entité ACC est communiquée à une entité LDGR.
Cette entité effectue l'enregistrement de tous les chèques traités et valides dans une table TAB5 ainsi qu'une mise à jour des comptes pour chaque commerçant client de la banque pour inscription de leur nouveau solde.
Dans le cas où l'entité B a décelé un chèque non authentifié ou déjà utilisé, ce chèque est inscrit dans une table TBL correspondant à une liste noire (de faux chèques). Cette liste est transmise aux terminaux de paiement COM lors d'une collecte suivante. Ceci permet de mettre à jour la liste noire de ces terminaux qui pourront alors refuser des chèques figurant déjà sur cette liste lorsqu'ils procéderont à une procédure d'authentification du chèque transmis par une carte de paiement.
Ainsi selon l'invention, le système permet d'assurer des paiements par chèques électroniques de façon sécurisée même sans avoir l'identité du porteur de la carte porte-monnaie électronique qui a émis le chèque. Car en effet tout comme lorsque l'on paie avec de la monnaie conventionnelle, le paiement avec de la monnaie électronique et même dans le cas d'un chèque électronique, se fait sans connaître l'identité du payeur.
Toutefois, il est prévu que l'entités B effectue un troisième traitement consistant à comparer deux chèques ayant les mêmes signatures Sbq et Sc mais des signatures Sp différentes pour retrouver l'identité du payeur.
En effet si Sp1 et Sp2 sont les deux signatures calculées par une carte au moment d'effectuer un paiement à partir d'un chèque Ch1 (Sbq1, Sc1) et au moment d'un autre paiement avec le même chèque Ch1 que le porteur aura de manière frauduleuse dupliqué, il est possible par des procédures classiques de vérification de ces deux signatures de retrouver l'identité cachée dans ces deux signatures du porteur (payeur).

## Revendications

1. Système de paiement par transfert de monnaie électronique telle que des chèques électroniques à signature aveugle à travers un réseau interbancaire comprenant une unité de compensation (A), **caractérisé en ce que** ladite unité de compensation interbancaire permet le transfert de monnaie électronique entre une pluralité de banque pour le paiement de montants compensés à l'issue des paiements par chèques électroniques, **en ce que**
ledit réseau interbancaire relie l'unité de compensation à la pluralité de banques, et permet le transfert de chèques électroniques à partir d'un terminal de paiement à ladite unité de compensation interbancaire (B), et **en ce qu'**il comporte une unité (B) de vérification d'authenticité et de non-réutilisation de chèques électroniques, ayant déjà transité par le réseau bancaire après un premier paiement ladite unité étant reliée à l'unité de compensation bancaire (A).

2. Système de paiement selon la revendication 1, **caractérisé en ce que** l'unité (B) de vérification comporte des moyens de traitement (CAL) permettant d'effectuer des opérations d'authentification et des opérations de comparaison des signatures électroniques de chèques reçus, à des signatures déjà enregistrées.

3. Système de paiement selon la revendication 2, **caractérisé en ce que** les moyens de traitement (CAL) permettent en outre d'effectuer une recherche d'identité du signataire de chèques utilisés plusieurs fois.

4. Système de paiement selon l'une quelconque des revendications précédentes, **caractérisé en ce que** l'unité (B) comporte des moyens de mémorisation (TAB3) des chèques électroniques transférés par le réseau lors d'une opération de collecte.

5. Système de paiement selon l'une quelconque des revendications précédentes, **caractérisé en ce que** l'unité (B) comporte des moyens de mémorisation (TBL) d'une liste noire dans laquelle sont enregistrés les chèques électroniques non authentifiés ou réutilisés.

6. Système de paiement selon l'une quelconque des revendications précédentes, **caractérisé en ce que** l'unité de compensation (A) comporte une entité (CENTRE) permettant de réaliser un aiguillage des informations reçues d'une unité de collecte (BC), et une entité (CLR) de compensation.

7. Système de paiement selon la revendication 6, **caractérisé en ce que** l'entité de compensation (CLR) comporte des moyens de traitement (TCLB) et des moyens de mémorisation (TAB4) permettant de déterminer et d'enregistrer les débits de chaque banque émettrice et les crédits de chaque banque collectrice.

8. Système de paiement selon l'une quelconque des revendications précédentes, **caractérisé en ce que** la banque de collecte (BC) comporte des moyens de traitement et de mémorisation (ACC) pour opérer un test de cohérence des informations collectées et pour mémoriser à partir de ces informations les chèques électroniques acceptés après ce test.

9. Système de paiement selon la revendication 8, **caractérisé en ce que**, la banque de collecte comporte en outre une entité de traitement et de mémorisation (LDGR) permettant d'effectuer l'enregistrement de tous les chèques électroniques traités par l'unité de vérification (B) et valides ainsi qu'une mise à jour des comptes pour chaque commerçant client de cette banque.

## Claims

1. System for payment by transfer of electronic money such as electronic cheques with a blind signature through an inter-bank network comprising a compensation unit (A), **characterised by** the fact that the said inter-bank compensation unit allows the transfer of electronic money between a plurality of banks for the payment of compensated sums at the end of payments by electronic cheques, by the fact that the said inter-bank network connects the compensation unit to the plurality of banks and permits the transfer of electronic cheques from a payment terminal to the said inter-bank compensation unit (B) and by the fact that it includes a verification unit (B) of authenticity and of non-reuse of electronic cheques, having already passed through the bank network after a first payment, the said unit being linked to the bank compensation unit (A).

2. System of payment as described in claim 1, **characterised by** the fact that the unit (B) of verification includes processing means (CAL) allowing the carrying out of authentification operations and operations of comparison of the electronic signatures of cheques received with signatures already recorded.

3. System of payment as described in claim 1, **characterised by** the fact that the processing means (CAL) also allow an identity search to be carried out of the signature of cheques used a plurality of times.

4. System of payment as described in any one of the preceding claims, **characterised by** the fact that the unit (B) includes means for storage (TAB3) of the electronic cheques transferred through the network at a collection operation.

5. System of payment as described in any one of the preceding claims, **characterised by** the fact that the unit (B) includes means for storage (TBL) of a black list in which are recorded the non-authenticated or re-used electronic cheques.

6. System of payment as described in any one of the preceding claims, **characterised by** the fact that the compensation unit (A) includes an entity (CENTRE) permitting the carrying out of routing of the data received from a collect unit (BC), and a compensation entity (CLR).

7. System of payment as described in claim 6, **characterised by** the fact that the compensation entity (CLR) includes processing means (TCLB) and storage means (TAB4) permitting determination and recording of the debits of each emitting bank and the credits of each collecting bank.

8. System of payment as described in any one of the preceding claims, **characterised by** the fact that the collect bank (BC) includes processing and storage means (ACC) to perform a coherence test of the collected data and to store from these data the electronic cheques accepted after this test.

9. System of payment as described in claim 8, **characterised by** the fact that the collect bank also includes a processing and storage entity (LDGR) permitting the carrying out of recording of all the electronic cheques processed by the verification unit (B) and valid, and display of accounts for each merchant who is a client of this bank.

## Patentansprüche

1. Zahlungssystem durch elektronische Geldüberweisung, z.B. elektronische Schecks mit Blindsignatur, über ein Bankennetzwerk mit einer Verrechnungseinheit (A),
**dadurch gekennzeichnet,**
**dass** die genannte Bankenverrechnungseinheit die Überweisung von elektronischem Geld zwischen einer Vielzahl von Banken für die Zahlung von nach Abschluss der Zahlungen mittels elektronischer Schecks verrechneten Beträgen ermöglicht, dadurch, dass das genannte Bankennetzwerk die Verrechnungseinheit mit einer Vielzahl von Banken verbindet und die Transferierung elektronischer Schecks von einem Zahlungsterminal aus an die genannte Bankenverrechnungseinheit (A) ermöglicht, und dadurch, dass es eine Einheit (B) zur Überprüfung der Authentizität und der Nichtwiederverwendung elektronischer Schecks umfasst, die nach einer ersten Zahlung schon einmal das Bankennetzwerk durchlaufen haben, wobei die genannte Einheit mit der Bankenverrechnungseinheit (A) verbunden ist.

2. Zahlungssystem nach Anspruch 1, **dadurch gekennzeichnet, dass** die Überprüfungseinheit (B) Verarbeitungseinrichtungen (CAL) umfasst, die ermöglichen, Authentifizierungsoperationen und Vergleichsoperationen der elektronischen Signaturen von empfangenen Schecks mit schon aufgezeichneten Signaturen durchzuführen.

3. Zahlungssystem nach Anspruch 2, **dadurch gekennzeichnet, dass** die Verarbeitungseinrichtungen (CAL) außerdem ermöglichen, eine Identitäts-Recherche der Signatur mehrmals verwendeter Schecks durchzuführen.

4. Zahlungssystem nach einem der vorangehenden Ansprüche, **dadurch gekennzeichnet, dass** die Einheit (B) Speichereinrichtungen (TAB3) der durch das Netzwerk bei einer Sammeloperation transferierten Schecks umfasst.

5. Zahlungssystem nach einem der vorangehenden Ansprüche, **dadurch gekennzeichnet, dass** die Einheit (B) Speichereinrichtungen (TBL) einer schwarzen Liste umfasst, in der die nicht authentifizierten oder wiederverwendeten Schecks abgespeichert werden.

6. Zahlungssystem nach einem der vorangehenden Ansprüche, **dadurch gekennzeichnet, dass** die Verrechnungseinheit (A) eine Stelle (CENTER) umfasst, die eine Verzweigung bzw. Verteilung der von einer Sammeleinheit (BC) empfangenen Informationen und eine Verrechnungsstelle (CLR) umfasst.

7. Zahlungssystem nach Anspruch 6, **dadurch gekennzeichnet, dass** die Verrechnungsstelle (CLR) Verarbeitungseinrichtungen (TCLB) und Speichereinrichtungen (TAB4) umfasst, die ermöglichen, die Debets bzw. Sollbeträge jeder Senderbank und die Kredite bzw. Habenbeträge jeder Empfängerbank festzustellen und abzuspeichern.

8. Zahlungssystem nach einem der vorangehenden Ansprüche, **dadurch gekennzeichnet, dass** die Empfängerbank (BC) Verarbeitungs- und Speichereinrichtungen (ACC) umfasst, um einen Kohärenztest der gesammelten Informationen durchzuführen und um aufgrund dieser Informationen die nach diesem Test akzeptierten Schecks abzuspeichern.

9. Zahlungssystem nach Anspruch 8, **dadurch gekennzeichnet, dass** die Empfängerbank außerdem eine Verarbeitungs- und Speichereinheit (LDGR) umfasst, die ermöglicht, Aufzeichnungen aller durch die Authentizitätsüberprüfungseinheit (B) verarbeiteten und gültigen Schecks sowie eine Aktualisierung der Konten für jeden Geschäftskunden dieser Bank durchzuführen.
